Europäisches Patentamt

European Patent Office

Office européen des brevets

(11) Veröffentlichungsnummer: **0 084 881**
**A2**

(12) **EUROPÄISCHE PATENTANMELDUNG**

(21) Anmeldenummer: **83100599.6**

(22) Anmeldetag: **24.01.83**

(51) Int. Cl.³: **F 02 M 31/16**

(30) Priorität: **27.01.82 DE 3202533**

(43) Veröffentlichungstag der Anmeldung: **03.08.83**
Patentblatt **83/31**

(84) Benannte Vertragsstaaten: **BE CH FR GB IT LI NL SE**

(71) Anmelder: **Lacrex Brevetti S.A., Via all'Eco,
CH-6644 Orselina/TI (CH)**

(72) Erfinder: **Pasbrig, Max, Via all'Eco, CH-6644 Orselina/TI
(CH)**

(74) Vertreter: **Hain, Leonhard, Dipl.-Ing., Tal 18/IV,
D-8000 München 2 (DE)**

(54) Vorrichtung zum Vorwärmen von Flüssigkeiten insbesondere von flüssigen Brenn- oder Kraftstoffen.

(57) Bei einer Vorrichtung zum Vorwärmen von Flüssigkeiten, insbesondere von flüssigen Brenn- oder Kraftstoffen ist nahe einer wärmeleitenden Heizwand (10) eines Wärmetauschers eine Wärmequelle angeordnet. Die Heizwand (10) begrenzt einen flächenförmigen Heizraum (5), der von der zu erwärmenden Flüssigkeit durchflossen wird, wobei der zunächst strangförmige Flüssigkeitsstrom in eine flächenförmige Flüssigkeitsschicht umgeformt wird.

Die Wärmequelle, die zweckmässig eine handelsübliche Halogenglühlampe ist, soll möglichst mit einem Reflektor (12) ausgestattet sein, dessen Strahlenbündel auf die Heizwand (10) gerichtet ist.

C084881

Anmelder: Lacrex Brevetti S.A., Via all'Eco, CH - 6644 Orselina

Titel: Vorrichtung zum Vorwärmen von Flüssigkeiten insbesondere von flüssigen Brenn- oder Kraftstoffen


Beschreibung

Die Erfindung betrifft eine Vorrichtung zum Vorwärmen von Flüssigkeiten, insbesondere von flüssigen Brenn- oder Kraftstoffen mit einem von der vorzuwärmenden Flüssigkeit durchflossenen Wärmetauscher, der mit einer Wärmequelle ausgerüstet ist.

Bei den bekannten Vorrichtungen dieser Art (DE-PS 22 62 030) sind die als Wärmequelle dienenden Halogenglühlampen in einem Wärmetauscher so untergebracht, daß sich die Glühlampen möglichst nahe der Flüssigkeitsleitung befinden. Die durch den Wärmetauscher geführte Rohrleitung bietet dabei nur geringe Anstrahlflächen, so daß die Erwärmung fast ausschließlich durch die von den Glühlampen erzeugte Raumwärme erfolgt. Um ein günstiges Temperaturgefälle zu erhalten, ist zwar ein möglichst kleiner Heizraum anzustreben, jedoch verringert sich dadurch wieder die Verweildauer der Flüssigkeit im Heizbereich. Durch die Flüssigkeitsführung in Strangform ergibt sich ferner eine ungleichmäßige Erwärmung des Flüssigkeitsstromes. Vor allem für größere Flüssigkeitsmengen oder für fortwährend strömende Flüssigkeiten sind diese bekannten Einrichtungen oft zu wenig wirksam.

Der Erfindung liegt daher die Aufgabe zugrunde, einen Wärmetauscher der eingangs genannten Art derart zu verbessern, daß die Flüssigkeit rascher und gleichmäßiger erwärmt wird.

Diese Aufgabe wird gemäß der Erfindung durch eine Vorrichtung der eingangs genannten Art mit den kennzeichnenden Merkmalen des Anspruches 1 gelöst.

Durch Entlangführung des Flüssigkeitsstromes an einer flächigen Heizwand unter Umformung in einen bandförmigen Flüssigkeitsstrom wird eine wesentlich wirksamere Erwärmung der Flüssigkeit erreicht. Die bandförmige, verhältnismäßig dünne Flüssigkeitsschicht wird vor allem auch gleichmäßig erwärmt, wobei durch die wiederholte Veränderung der Querschnittsform des Flüssigkeitsstromes auch die Durchmischung der Flüssigkeit verstärkt wird. Die wirksame Erwärmung läßt andererseits wieder höhere Fördergeschwindigkeiten zu.

Die Heizleistung wird besonders durch ein Reflektorgehäuse für die Glühlampen erhöht, weil hierbei eine Konzentrierung der Bestrahlung der Heizfläche erreicht und der Heizraum möglichst klein gehalten wird.

Weitere Merkmale der Erfindung sind in zusätzlichen Unteransprüchen beansprucht.

Die Erfindung wird nachfolgend anhand eines Ausführungsbeispieles, das auch in der Zeichnung dargestellt ist, näher beschrieben. Es zeigen:

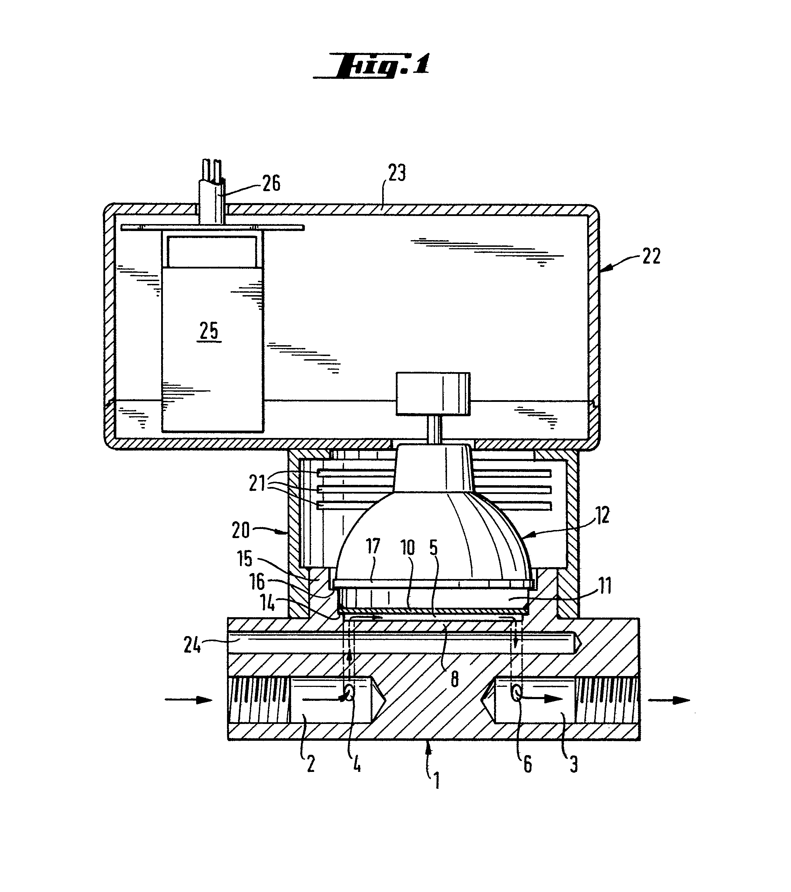

Fig. 1 einen Vertikalschnitt durch einen Wärmetauscher und
Fig. 2 eine Seitenansicht hierzu.

CO84881

Der dargestellte Wärmetauscher besteht aus einem Anschlußblock 1 mit den beiden Anschlußbohrungen 2,3 für eine Flüssigkeitszu- und Flüssigkeitsableitung. Von der Anschlußbohrung 2 führt eine Querbohrung 4 zu einem Heizraum 5 und von diesem eine Querbohrung 6 zur Anschlußbohrung 3 zurück. Diese beiden Querbohrungen sind zweckmäßig diagonal zueinander versetzt. Der Heizraum wird von einer Seitenwand 8 des Anschlußblockes sowie von einer Heizwand 10, die in geringem Abstand parallel zur Seitenwand 8 verläuft, gebildet. Diese Heizwand besteht aus gut wärmeleitendem Werkstoff, wie z.B. Kupfer, Glas od.dgl. Ihre flächenmäßige Ausdehnung entspricht zweckmäßig einer Öffnung 11 eines Ellipsoidreflektors 12. Entsprechend dem Reflektorquerschnitt wird daher diese Heizwand ebenfalls kreisrund sein. Die Heizwand 10 ist mittels einer Abstufung 14 in einem an den Anschlußblock angeformten Ringaufsatz 15 fixiert. Eine weitere Abstufung 16 dient zur Halterung eines Reflektorringes 17. Um die Wärmeabsorption der Heizwand zu verstärken, kann diese auf der bestrahlten Seite noch geschwärzt sein. Im Reflektorgehäuse 12 befindet sich zweckmäßig eine übliche Halogenglühlampe (nicht sichtbar), die leicht einsetz- und auswechselbar gehaltert ist. Beispielsweise hat sich die Verwendung von Ellipsoidreflektorkolben, wie sie in Projektionsgeräten eingesetzt werden, bestens bewährt. Der Reflektor mit der Glühlampe ist von einem Gehäusezylinder 20 umschlossen, in dem zur Belüftung und zur Wärmeabfuhr der nach außen abgegebenen Wärme Lüftungsschlitze 21 ausgebildet sind. Auf diesem Gehäusezylinder ist ein weiterer Gehäusekasten 22 in zweckmäßiger Weise befestigt. Sein Oberteil 23 soll leicht abnehmbar sein, damit die Halogenglühlampe leicht ausgewechselt werden kann.

Im Anschlußblock    1 ist noch eine Einsteckbohrung 24 zur Aufnahme eines Wärmefühlers (nicht gezeichnet) vorgesehen, der mittels eines Verbindungsdrahtes mit einem im Gehäusekasten 22 untergebrachten Temperaturregler 25 in Verbindung steht. Dieser Temperaturregler dient zum Schalten der Glühlampe entsprechend dem Heizbedarf. Es kann sich um eine Ein- und Ausschaltung oder auch um eine stufenlose Regelung handeln. Mit 26 ist ein elektrisches Zuleitungskabel bezeichnet.

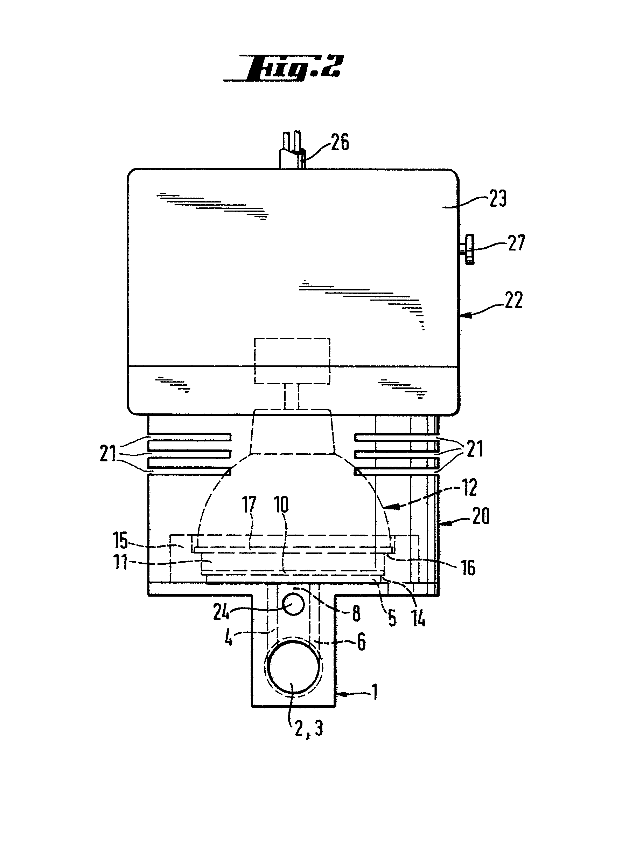

Die Befestigung des Reflektors 12 im Gehäusezylinder 20 bzw. im Gehäusekasten erfolgt in geeigneter Weise je nach der handelsüblichen Ausbildung dieser Teile. Ebenfalls besteht die Möglichkeit, den Gehäusezylinder auf andere Weise, beispielsweise durch eine Steckverbindung mit dem Oberkasten zu verbinden. Zum Einstellen des Reglers dient ein Reglerknopf 27 (Fig. 2), der seitlich aus dem Gehäusekasten 22 vorsteht.

Die gezeigte Vorrichtung ist nicht nur zum Vorwärmen von kleinsten Flüssigkeitsmengen, wie Kraftstoff für Verbrennungskraftmaschinen oder Brennöl für Feuerungsanlagen geeignet, sie kann auch zu Anwärmen von beispielsweise Wasser oder anderen Flüssigkeiten dienen, soweit es sich um geringeren Bedarf handelt. In diesem Fall empfiehlt es sich den Heizraum durch Zwischenlage eines Abstandsringes etwas zu erhöhen.

Eine durch die Anschlußbohrung 2 zufließende Flüssigkeit gelangt über die Querbohrung 4 in den Heizraum 5, wo sich der bisher strangförmige Flüssigkeitsstrom flächenmäßig verteilt und ausbreitet, so daß der Heizwand 10 entlang nur noch eine dünne Flüssigkeitsschicht, und zwar wegen der Querschnittserweiterung mit verminderter Geschwindigkeit bewegt wird. Hierdurch ergibt sich eine merkliche Erwärmung der Flüssigkeit durch die Heizwand hindurch, bevor sie durch die Querbohrung 6 zur Anschlußbohrung 3 abgeleitet wird.

Die im Ausführungsbeispiel verwendete Halogenglühlampe mit Reflektor kann auch durch eine andere Glühlampe oder durch einen Heizstab od.dgl. Wärmequelle ersetzt sein. Auf einen geeigneten Reflektor kann natürlich dann verzichtet werden, wenn die verwendete Wärmequelle keine oder nur geringe Strahlungswärme abgibt. Falls aber ein Reflektor eingesetzt wird, dann wird dieser der Form und der Art der Wärmequelle angepaßt sein.

Wenn die Heizwand 10 nicht schon durch den Reflektor in ihrer Stellung gehalten ist, dann wird sie zweckmäßig eingelötet oder eingepreßt. Als vorteilhaft hat sich ferner gezeigt, wenn zwischen der Reflektoröffnung (Ring 17) und der Heizwand 10 ein Abstand erhalten bleibt.

Anmelder: Max Pasbrig, Via Eco, CH - 6644 Orselina

Titel: Vorrichtung zum Vorwärmen von Flüssigkeiten, insbesondere von flüssigen Brenn- oder Kraftstoffen

Patentansprüche

1. Vorrichtung zum Vorwärmen von Flüssigkeiten, insbesondere von flüssigen Brenn- oder Kraftstoffen, mit einem von der zu erwärmenden Flüssigkeit durchflossenen Wärmetauscher, der mit einer Wärmequelle ausgerüstet ist, dadurch gekennzeichnet, daß die Wärmequelle nahe einer wärmeleitenden Heizwand (10) eines zur Bildung einer flächenförmigen Flüssigkeitsverteilung ausgebildeten Heizraumes (5) angeordnet ist.

2. Vorrichtung nach Anspruch 1, dadurch gekennzeichnet, daß die Wärmequelle in einem Reflektor (12) untergebracht ist, dessen Strahlenbündel auf die Heizwand (10) gerichtet ist.

3. Vorrichtung nach Anspruch 1 oder 2, dadurch gekennzeichnet, daß die Heizwand (10) mit ihrer vollen Ausdehnung im Reflektor-Strahlenbündel liegt.

4. Vorrichtung nach einem der Ansprüche 1 bis 3, dadurch gekennzeichnet, daß die Heizwand (10) die Reflektor-Öffnung (11) abschließt.

5. Vorrichtung nach einem der Ansprüche 1 bis 4, dadurch gekennzeichnet, daß die Heizwand (10) geschwärzt ist.

6. Vorrichtung nach einem der Ansprüche 1 bis 5, dadurch gekennzeichnet, daß der Reflektor (12) mit der Wärmequelle in einem Gehäusezylinder (20) mit Belüftungsschlitzen (21) untergebracht ist, der mit einem die Rohrleitungsanschlüsse (2,3) und den Heizraum (5) begrenzenden Anschlußblock (1) zusammensteckbar ist.

7. Vorrichtung nach einem der Ansprüche 1 bis 6, dadurch gekennzeichnet, daß im Anschlußblock (1) eine Einsteckbohrung (24) für ein Thermoelement ausgebildet ist, das mit einem Regler (25) für die Schaltung der Wärmequelle verbunden ist.

8. Vorrichtung nach einem der Ansprüche 1 bis 7, dadurch gekennzeichnet, daß als Wärmequelle eine Halogenglühlampe eingesetzt ist.

**Fig.1**

Fig.2